# FASCICULE DE BREVET EUROPEEN

(11) **EP 3 115 624 B1**
(45) Date de publication et mention de la délivrance du brevet: **12.09.2018**
(21) Numéro de dépôt: 16305849.8
(22) Date de dépôt: 05.07.2016
(51) Int. Cl.: F16B 7/04, E04B 9/12

(54) **DISPOSITIF DE LIAISON AMOVIBLE D'AU MOINS DEUX PROFILES CROISES**
ENTFERNBARE VERBINDUNGSVORRICHTUNG MIT MINDESTENS ZWEI GEKREUZTEN PROFILEN
DEVICE FOR DETACHABLE CONNECTION OF AT LEAST TWO CROSSED PROFILES

(30) Priorité: 07.07.2015 FR 1556444
(43) Date de publication de la demande: 11.01.2017
(73) Titulaire: Etablissement Leroux SA, 37460 Villeloin Coulange (FR)
(72) Inventeur: LEROUX, Philippe, 36700 CHÂTILLON SUR INDRE (FR); KLEIN, Jean Pierre, 92140 CLAMART (FR); ZAK, Robert, 78985 MOHELNICE (CZ)
(74) Mandataire: Ipside

(56) Documents cités:
- DE-B1- 2 510 946
- DE-U1- 8 533 597
- FR-A1- 2 879 635

## Description

La présente invention concerne un dispositif permettant d'assurer la liaison ou d'assembler, de manière amovible, au moins deux profilés destinés à être disposés de manière croisée et notamment à angle droit, soit les trois profilés étant dans un même plan, soit deux profilés étant coplanaires et le troisième étant dans un plan perpendiculaire.

Le dispositif de l'invention est plus particulièrement destiné au domaine de la construction, pour réaliser des structures porteuses, comprenant des séries de profilés, métalliques, généralement en acier galvanisé ou en aluminium extrudé, et présentant des sections droites de formes variées ; en C, en Oméga, en I, en L, etc. Ces profilés sont disposés parallèles et à angle droit, pour former un maillage, et sur lequel sont fixées des plaques de plâtres, pour former un faux plafond.

On sait que ce type de structure pour faux plafond comporte soit :
a) - une série de profilés en "C" appelés couramment "fourrures" disposés parallèlement les uns aux autres avec un intervalle de l'ordre de 60 cm.
b) -une série de profilés dits primaires, disposés parallèlement les uns aux autres, avec un intervalle de l'ordre de 120 cm ;
   - une série de profilés dits entretoises, perpendiculaires aux primaires, et disposés à un intervalle de l'ordre de 60 cm.

Les primaires présentent une rigidité et une résistance à la flexion bien supérieures à celles des entretoises.

Il existe plusieurs types de dispositifs permettant la liaison, amovible ou non, entre les profilés primaires et les entretoises.

Cependant, il est des cas où la construction ou le bâtiment que l'on doit munir d'un faux plafond, nécessite de renforcer la structure porteuse et/ou de prévoir des points de fixation ou support supplémentaires des panneaux de faux-plafond, comme par exemple pour réaliser des ouvertures.

De même, il peut être nécessaire ou adéquat dans certains cas de renforcer la résistance de la structure, au feu par exemple.

De manière connue, on ajoute un ou plusieurs profilés primaires supplémentaires entre deux profilés primaires d'origine (de la structure de base).

Ceci présente des inconvénients.

Premièrement, en matière de coût de matériau. En effet, le ou les profilés primaires ajoutés sont en général surdimensionnés par rapport aux besoins.

Deuxièmement, en termes de main-d'oeuvre compte tenu de la nécessité de fixer d'une part les profilés primaires ajoutés sur les murs du bâtiment, et d'autre part les entretoises d'origine sur les profilés primaires ajoutés, et ce d'autant plus que la liaison entre une entretoise et un profilé primaire n'est en général pas amovible et fait donc appel à des moyens de solidarisation relativement élaborés et/ou longs à mettre en oeuvre.

Pour pallier à cette incommodité, le brevet allemand DE 25 10 946 décrit un dispositif de liaison en forme de croix permettant de relier deux profilés disposés de manière croisée.

Par ailleurs, l'art antérieur ne propose pas de moyens de liaison amovible de deux profilés coplanaires (ou colinéaires) à un troisième disposé dans un plan perpendiculaire.

L'invention vise à remédier à cette situation et propose ainsi un dispositif permettant de solidariser, assembler ou relier rapidement, aisément et de manière sure, deux profilés (secondaire ou fourrure) l'un à l'autre et disposés à angle droit, à savoir une première entretoise d'origine de la structure porteuse, et une seconde entretoise ajoutée pour des besoins spécifiques.

A cette fin, selon l'invention, le dispositif destiné à assurer la liaison amovible, d'au moins deux profilés, destinés à être disposés de manière croisée et notamment à angle droit, et/ou destinés à être disposés dans deux plans sensiblement perpendiculaires, est conforme à la revendication 1.

Le dispositif de l'invention permet ainsi de solidariser entre eux deux profilés sensiblement similaires, du type entretoise, disposés à angle droit, et ce sans moyen additionnel, outil ou autre.

Ainsi, il est possible d'ajouter une ou plusieurs entretoises additionnelles à une structure porteuse d'origine ou de base, en les disposant parallèlement aux profilés primaires, et les lier (solidariser) aux entretoises de la structure d'origine. Cet ajout permet de répondre aux besoins spécifiques de la structure porteuse, et ce de manière économique et simple grâce au dispositif de liaison de l'invention.

De plus, il est également possible d'ajouter une ou plusieurs entretoises additionnelles à une structure porteuse d'origine ou de base, en les disposant verticalement, perpendiculairement au plan défini par ladite structure porteuse, et les lier (solidariser) aux entretoises de la structure d'origine.

Chaque entaille en forme de V est d'axe médian orienté sensiblement selon l'un des bords respectifs à angle droit de la découpe de coin correspondante.

Les éléments de soutien sont agencés dans un même plan parallèle à l'âme de sorte que les surfaces d'appui de toutes les découpes soient coplanaires pour accueillir les profilés dans un même plan.

Plus précisément, chaque élément de soutien est apte à porter par-dessous, sur une surface correspondante de l'entretoise ou profilé, tournée vers l'âme. Le profilé porte par gravité sur cet élément de soutien.

Chaque élément de soutien présente la forme d'un doigt ou crochet, plus précisément en forme de L, dont la concavité est tournée d'une part vers l'âme et d'autre part vers l'extrémité du côté correspondant à l'âme.

Avantageusement, chaque élément de soutien est intégré à une patte orthogonale audit plan de l'âme, s'étendant dans une même direction (en direction du bas en position montée du dispositif), d'un côté du plan de l'âme, et dans deux plans distincts orthogonaux entre eux, chaque élément de soutien étant une découpe, fente ou encoche (dans une direction transversale à la direction d'extension de la patte) dont au moins un des chants forme le moyen d'accueil d'un profilé, par engagement du profilé, et la surface d'appui et de maintien dudit profilé, la surface d'appui étant parallèle à l'âme.

La découpe forme un moyen de logement pour un bord d'un profilé, le fond de la découpe constituant une butée pour ledit bord du profilé, et l'un des chants de la découpe (le chant inférieur en position montée du dispositif) constituant la surface d'appui et de maintien du bord du profilé.

Chaque patte comporte deux éléments de soutien alignés et de part et d'autre du plan de l'âme. Les deux éléments de soutien sont parallèles au plan de l'âme.

Chaque élément de soutien est une découpe, fente ou encoche prévue sur chaque patte.

Les pattes du dispositif sont en saillie de l'âme selon une même direction, et sont destinées à s'engager pour chacune dans l'intérieur d'un profilé, tandis que chaque élément de soutien coopère avec le bord d'un profilé pour soutenir ce dernier.

Le dispositif comporte quatre pattes parallèles deux à deux, de manière à lier une entretoise à deux autres disposées en alignement. Ainsi, les deux premières pattes parallèles coopèrent avec l'intérieur d'une première entretoise, tandis qu'une troisième patte coopère avec l'intérieur d'une seconde entretoise, et la quatrième patte coopère avec l'intérieur d'une troisième entretoise.

L'âme du dispositif est une plaque plane.

De préférence, la plaque plane comporte des ailes qui, une fois pliées sensiblement à angle droit, forment chacune une patte.

La plaque comporte au moins un trou pour le passage d'une vis ou d'un organe de fixation du dispositif sur tout support, mur, etc.

Le dispositif est en métal.

L'invention porte également sur un ensemble selon la revendication 10.

La présente invention est maintenant décrite à l'aide d'exemples uniquement illustratifs et nullement limitatifs de la portée de l'invention, à partir des figures suivantes :
La figure 1 montre un dispositif de liaison en perspective de dessus.
La figure 2 montre partiellement en perspective un profilé sur lequel est destiné à être monté un dispositif de liaison.
La figure 3 montre le profilé de la figure 2 sur lequel est monté un dispositif de liaison.
La figure 4 montre en coupe transversale, selon un plan vertical transversal, le profilé de la figure 3, sur lequel est monté un dispositif de liaison.
La figure 5 montre deux profilés parallèles, reliés à un troisième, perpendiculaire aux deux autres, par des dispositifs de liaison.
La figure 6 est une vue de dessus en perspective d'une structure porteuse montrée en partie, avec des dalles de faux-plafond, incluant un dispositif de liaison.
Les figures 7 et 8 sont des vues en perspective de dessus de variantes de réalisation du dispositif de liaison.
La figure 9 montre une vue en perspective de dessus une autre variante du dispositif de liaison.
La figure 10 montre deux profilés coplanaires liés à un troisième dans un plan perpendiculaire, à l'aide du dispositif de liaison.
La figure 11 est une vue similaire à la figure 10 montrant plus en détail la liaison entre le dispositif de liaison et le profilé vertical.

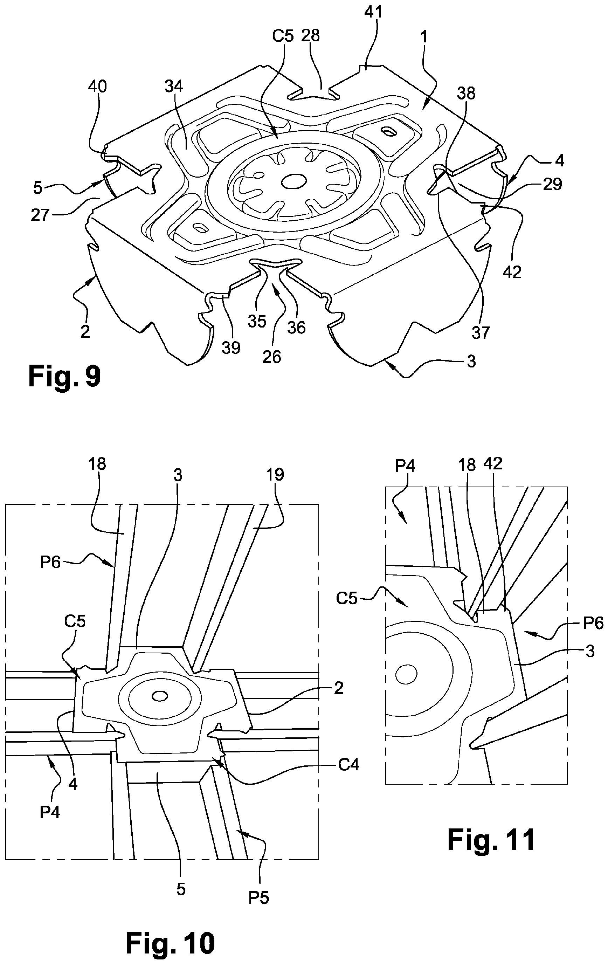

Le dispositif de liaison de la figure 9 illustre le dispositif selon l'invention.

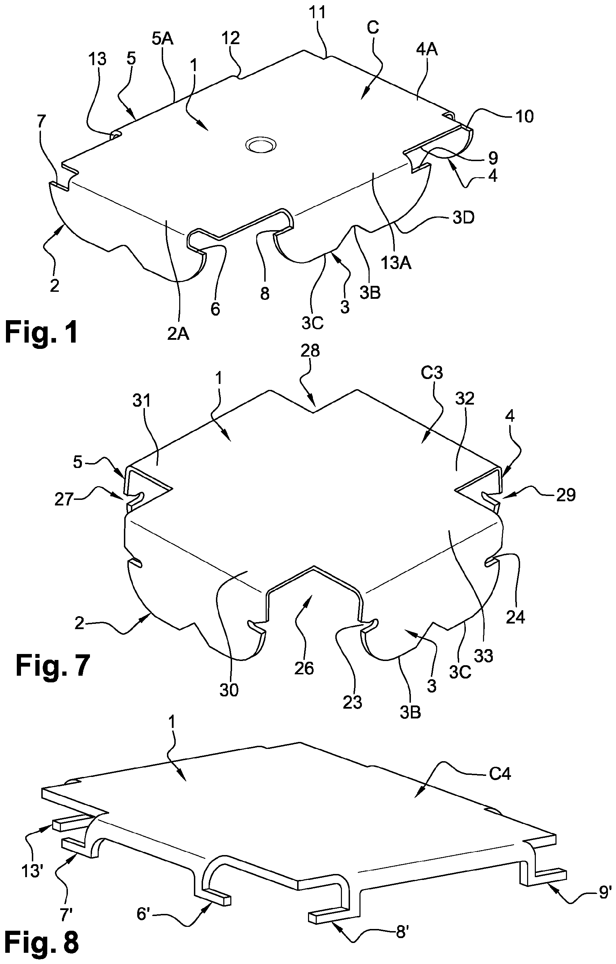

Les dispositifs de liaison des figures 1, 7 et 8 concernent des modes de réalisations ne faisant pas partie de l'invention. Ils sont présent à titre illustratif.

Les termes « horizontal », « supérieur », « inférieur », « bas » se référent à la position de l'élément qu'ils qualifient dans une position normale d'utilisation. Il en est de même des termes « longitudinal » et « transversal », et des termes « distal » et « proximal ».

En référence à la figure 1, on a représenté en perspective un exemple de réalisation du dispositif C de l'invention qui comporte :
- une âme 1 constituée d'une plaque plane rectangulaire ;
- quatre pattes 2, 3, 4, 5 disposées de manière orthogonale à la plaque plane 1, les pattes étant dirigées selon une même direction, et parallèles l'une à l'autre deux à deux, à savoir les pattes 3 et 5 d'une part et les pattes 2 et 4 d'autre part.

Chaque patte est reliée au bord correspondant de la plaque 1 par des parties arrondies respectivement 2A, 3A, 4A et 5A.

Dans l'exemple montré, les pattes 2 et 4 associées aux petits côtés de la plaque rectangulaire 1 présentent une largeur, mesurée le long dudit côté, sensiblement égale à ce dernier. Les deux autres pattes à savoir 3 et 5, associées aux deux grands côtés du rectangle de la plaque plane, présentent une longueur inférieure auxdits côtés.

De préférence, la largeur des quatre pattes est la même, mesurée dans la direction du côté correspondant auquel la patte est associée.

La plaque d'âme 1 et les pattes 2 à 5 sont réalisées de préférence à partir d'une plaque métallique, telle que par exemple de l'acier galvanisé, présentant des découpes, réalisées de manière connue, pour constituer, après avoir rabattu les pattes à 90° (en formant les parties arrondies 2A, 3A, 4A et 5A), le dispositif C de la figure 1.

Dans l'exemple de la figure 1, la longueur des parties arrondies 2A, 3A, 4A et 5A reliant la plaque à chaque patte, est inférieure, mesurée le long du côté correspondant de la plaque, à la largeur de chaque patte.

Chaque patte comporte une découpe ou encoche centrale (3B pour la patte 3) dans sa partie inférieure, délimitant ainsi deux bords longitudinaux colinéaires (3C et 3D pour la patte 3).

Chaque patte 2 à 5 inclut deux éléments dits de soutien, en forme de L, constituant chacun une sorte de doigt ou de crochet, dont la concavité est tournée d'une part vers la plaque 1 et d'autre part vers l'extrémité du côté correspondant de la plaque plane.

Pour le crochet 8 de la patte 3 par exemple, une branche dudit L est formée par le chant (transversal) d'extrémité de la partie arrondie de liaison 3A et l'autre branche dudit L est formée par un bord supérieur distal (longitudinal) de la patte.

Pour une patte donnée, on entend par « longitudinale » une direction le long du côté correspondant de la plaque plane, ou également la direction longitudinale de la partie de liaison correspondante entre une patte et la plaque plane.

De même, pour une patte donnée, on entend par transversale une direction orthogonale à la direction longitudinale définie ci-dessus.

Chaque patte comporte, à chacune de ses extrémités (le long du bord s'étendant perpendiculairement à la plaque plane), un crochet dont les références numériques sont les suivantes :
- patte 2 : crochets 6 et 7 ;
- patte 3 : crochets 8 et 9 ;
- patte 4 : crochets 10 et 11 ;
- patte 5 : crochets 12 et 13.

À noter que, compte tenu de la vue en perspective de la figure 1, les crochets 11, 12 et 13 sont peu ou à peine visibles.

Les deux crochets de chaque patte sont agencés de manière opposée par rapport à l'axe de symétrie vertical (selon la direction transversale) d'une patte. Les deux crochets d'une même patte présentent leur ouverture dirigée de manière opposée et tournées vers l'extérieur du dispositif.

L'ensemble des crochets est agencé dans un même plan parallèle à l'âme de sorte que les surfaces d'appui de tous les crochets soient coplanaires pour accueillir les profilés dans un même plan.

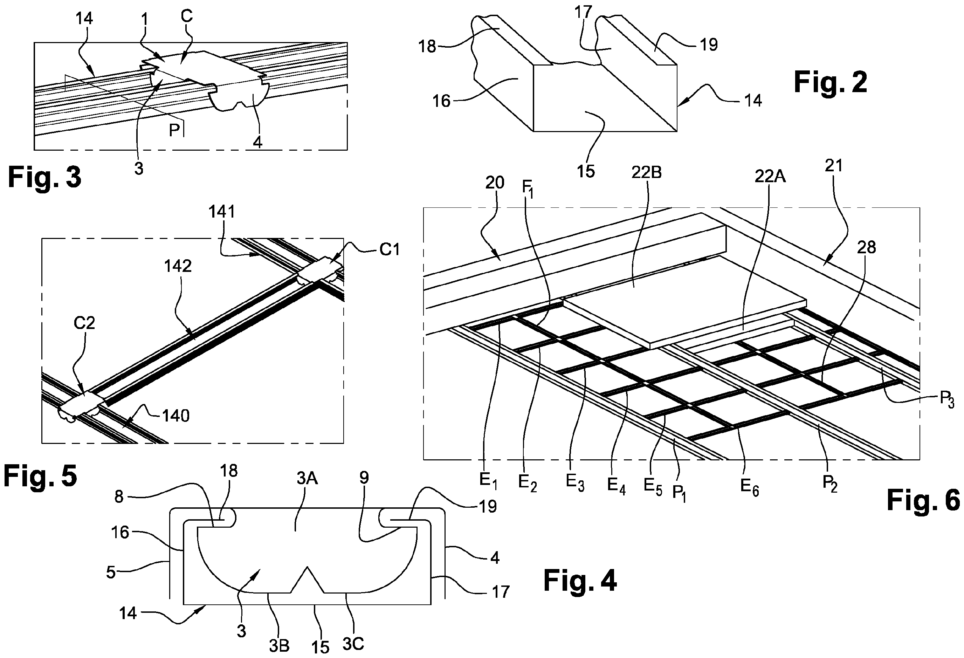

Le dispositif de liaison de la figure 1 est destiné à relier entre eux des profilés constituant des entretoises dont un exemple est montré de manière schématique et partielle sur la figure 3, en vue de face en perspective.

L'entretoise 14 est constituée de préférence en acier galvanisé (épaisseur 6/10 mm) et présente une longueur de préférence de 1,20 m.

L'entretoise 14 comporte :
- une semelle 15 ;
- deux flancs latéraux parallèles 16 et 17, perpendiculaires à la semelle 15, et disposés le long des bords longitudinaux de cette dernière ;
- deux retours 18 et 19 à angle droit, le long du bord distal de chaque flanc latéral 16, 17 ; les deux retours sont situés dans un même plan parallèle à la semelle 15, dirigés l'un vers l'autre et ménagent un espace ouvert destiné à accueillir le dispositif ; ils présentent une largeur, mesurée dans un plan transversal de l'entretoise, très inférieure à la largeur de la semelle 15.

À titre d'exemple :
- largeur de la semelle 15 : de 45 à 47mm ;
- hauteur de chaque flanc latéral 16,17 : de 17 à 18 mm ;
- largeur des retours 18 et 19 : 6 mm.

On décrit ci-après, en référence aux figures 3 et 4, l'assemblage, le montage ou la liaison du dispositif C de la figure 1, sur une entretoise telle que celle de la figure 2.

Le dispositif C pour lier des entretoises entre elles, est introduit à l'intérieur de l'entretoise par une des extrémités ouvertes de cette dernière, de façon que deux pattes parallèles et se faisant face, en l'occurrence les pattes 2 et 4, soit logées dans l'espace intérieur délimité par la semelle 15, les flancs latéraux 16 et 17, et les deux retours 18 et 19.

Plus précisément, les crochets 8 et 9 de la patte 2 et les crochets 10 et 11 de la patte 4 viennent en prise avec la face inférieure des retours 18 et 19 (la face tournée vers la semelle 15).

Les bords inférieurs 3B et 3C de la patte 3 portent contre la face intérieure de la semelle 15.

Pour des raisons de clarté du dessin, l'espace entre chaque crochet et ladite face inférieure a été exagéré, alors qu'en réalité celui-ci est réduit, de manière à laisser un jeu très faible (de l'ordre de ¼ à ½ mm), pour éviter le frottement du crochet sur ladite face inférieure. Il en est de même de l'espace entre les bords inférieurs 3B et 3C et la semelle, qui en réalité est réduit, voire quasi nul.

Le dispositif C est alors être translaté le long de l'entretoise jusqu'à la position requise (figure 3), en étant guidé par les pattes dans l'espace intérieur de l'entretoise.

La figure 5 montre en perspective deux entretoises parallèles 140 et 141, par exemple d'une structure porteuse existante, ou d'origine. Lesdites entretoises 140 et 141, dites de base, sont fixées (de manière connue) chacune à un profilé primaire (non représentés) qui leur sont perpendiculaires.

Dans l'exemple montré, il est ajouté une entretoise additionnelle 142 (de renfort ou autre) perpendiculaire aux entretoises de base 140 et 141, et parallèle aux profilés primaires.

L'entretoise additionnelle 142 est solidarisée aux entretoises de base 140 et 141 à chacune de ses extrémités par un dispositif de l'invention C1 et C2, respectivement, tel que décrit ci-dessus.

La figure 6 représente en perspective de dessus une partie d'une structure pour faux plafond, fixée sur des murs verticaux 20 et 21, perpendiculaires.

La structure comporte :
- des profilés primaires P1, P2, P3, parallèles au mur 21 et fixés de manière connue et non représentée sur ces derniers ;
- des séries d'entretoises de base, parallèles entre elles et perpendiculaires aux profilés, à savoir une première série d'entretoises référencées E1 à E6 entre les profilés P1 et P2, et une seconde série entre les profilés P2 et P3, dont seules les entretoises E7, E8 et E9 sont visibles, car les autres sont cachées par un panneau rectangulaire de plâtre ou similaire 22A posé sur les profilés P2 et P3 et un panneau isolant thermique 22B.

Ceci constitue la structure dite de base ou d'origine, qui est connue en elle-même dans son principe.

A cette dernière, sont ajoutées des entretoises additionnelles ou de renfort (ou autre), parallèles aux profilés, et reliant les entretoises de base E1 à E6, et E7 à E9 entre elles, deux à deux (par leur milieu), à l'aide des dispositifs C décrits ci-dessus.

Plus précisément, il est prévu des séries d'entretoises additionnelles colinéaires. Sont ainsi visibles sur l'exemple de la figure 6 :
- les entretoises additionnelles F1 à F5 pour les entretoises de base E1 à E6 ;
- les entretoises additionnelles e6 à e7 pour les entretoises de base E7 à E9.

L'espacement entre profilés primaires est de l'ordre de 1,2 m, et entre deux entretoises de base, de l'ordre de 0,6 m.

Chaque dispositif C de liaison d'entretoises peut coulisser sur l'entretoise dans laquelle il est introduit, et ainsi permettre de régler la position de l'entretoise additionnelle.

La figure 7 montre une variante C3 en perspective du dispositif de la figure 1, où la différence porte sur le moyen d'accrochage ou de coopération entre les retours 18 et 19 de l'entretoise (figure 2) et la patte correspondante.

En l'occurrence, chaque patte 2, 3, 4 et 5 comporte, sur chaque bord distal perpendiculaire à la plaque plane 1, une encoche ou entaille de direction longitudinale, référencées 23 et 24 pour la patte 3. Les couples d'encoches sur chaque patte, définissent ensemble un plan parallèle au plan de la plaque 1, et en dessous de celle-ci, en direction de l'extrémité distale des pattes.

Ces encoches sont destinées à recevoir, et coopérer avec, les retours 18 et 19 de l'entretoise qui pénètrent dans ces encoches et portent contre leurs bords.

Les quatre coins de la plaque 1 sont amputés chacun par une découpe de coin carrée 26, 27, 28, et 29, créant ainsi sur la plaque des parties rectangulaires 30, 31, 32 et 33, dont le bord distal est commun avec la partie supérieure de chaque patte. La plaque 1 forme ainsi une sorte de croix en vue de dessus.

De la même manière que pour l'exemple des figures 1 à 4, les bords inférieurs de chaque patte (les bords 3B et 3C par exemple de la patte 3) portent contre la surface intérieure de la semelle 15, cette forme de réalisation n'étant pas représentée.

La figure 8 montre en perspective de dessus encore une autre variante C4 du dispositif des figures 1 et 7. L'exemple représenté ne comporte pas de pattes s'étendant verticalement transversalement à l'âme, et la plaque plane 1 est associée à des couples de crochets en L, chaque couple étant disposés en regard d'un bord de la plaque plane.

Ces crochets présentent la même structure fonctionnelle que les crochets 6 à 13 du dispositif de la figure 1. Sur la figure 8, seuls sont visibles, du fait de la perspective, les couples de crochets 8', 9' et 6', 7', un autre crochet 13'.

Cette variante est plus économe en matière mais ne procure pas l'effet de guidage du dispositif par rapport à l'entretoise, obtenu par le dispositif des figures 1 à 4, grâce aux bords inférieurs (3C et 3D) portant contre l'âme de l'entretoise.

On décrit ci-après, en référence à la figure 9, un autre exemple de réalisation du dispositif de liaison, permettant d'assembler trois profilés selon la disposition de la figure 10.

Le dispositif C5 est similaire au dispositif C3 de la figure 7, et comporte ainsi une plaque plane 1 et quatre pattes perpendiculaires 2 à 5, chaque patte présentant deux encoches (telles les encoches 23 et 24 de la patte 3), et à chaque coin de la plaque est prévue une découpe carrée 26, 27, 28 et 29.

En outre, le dispositif C5 de la figure 9 comporte :
- sur la plaque plane 1, des nervures 34 en relief réalisant des creux et des bosses, selon un motif géométrique, constituant des éléments de raidissement de la plaque plane 1 et donc du dispositif dans son ensemble ;
- à chaque coin des découpes de coin 26 27, 28 et 29, des couples d'entailles, référencées 35, 36 pour la découpe de coin 26, et 37, 38 pour la découpe de coin 29 ; chaque entaille est en forme de V dont l'axe médian est orienté sensiblement selon l'un des deux bords respectifs à angle droit de la découpe de coin correspondante ;
- une pointe 39, 40, 41 et 42 faisant saillie par rapport à l'un des bords de chaque découpe de coin 26 à 29 et tournée vers l'intérieur de la découpe correspondante ; les pointes sont dans le plan de la plaque plane 1.

La figure 10 montre en perspective trois profilés, assemblés entre eux à l'aide du dispositif C5 de la figure 9, chaque profilé étant conforme à celui de la figure 2.

A un premier profilé P4 est assemblé un second profilé P5, comme montré sur la figure 5, P5 étant perpendiculaire à P4. les premier P4 et second P5 profilés sont coplanaires. Les pattes 2 et 4 du dispositif C5 sont engagées dans P4 et la patte 5 dans P5.

Un troisième profilé P6, vertical, disposé perpendiculairement au plan défini par P4 et P5, est assemblé à ces derniers. Dans le profilé vertical P6, est engagée la dernière patte 3 du dispositif de liaison C5.

Plus précisément, les retours 18 et 19 (voir figure 2) du profilé vertical P6 s'engagent chacun dans une entaille en V, 36 et 37 (voir figure 9) qui sont dirigées l'une vers l'autre et parallèles au plan de la patte 3 correspondante ; les entailles en V ont une forme adaptée à recevoir les retours 18 et 19 des ailes du profilé.

Plus précisément, chaque entaille en V présente un premier bord parallèle au plan de la première patte correspondante, et un second bord de direction inclinée dans le plan de la plaque plane et vers ladite première patte orthogonale.

Par ailleurs, le rôle, en référence à la figure 11, des pointes 39 à 42 du dispositif de liaison C5 est expliqué ci-après.

La patte 3 est disposée dans le profilé vertical P6, orthogonal au plan de la plaque plane du dispositif de liaison C5. La pointe 42 prévue (figure 9) sur le bord de la découpe de coin 29, porte contre le flanc latéral 18 du profilé P6, et repousse ledit flanc par déformation élastique.

Ceci permet ainsi de bloquer un profilé P6 vertical, dont l'écartement entre les flancs latéraux 18 et 19 pour certains profilés est, au repos, inférieur à la largeur de la partie de la plaque plane destinée à pénétrer dans le profilé vertical P6.

## Revendications

1. Dispositif (C) destiné à assurer la liaison amovible, d'au moins deux profilés (P4, P5, P6), destinés à être disposés de manière croisée et notamment à angle droit, et/ou destinés à être disposés dans deux plans sensiblement perpendiculaires comportant :
- Une âme (1) définissant un plan et présentant quatre coins ou angles ;
- au moins deux éléments de soutien aptes à former chacun un moyen d'accueil d'un profilé, par engagement du profilé, et une surface d'appui et de maintien dudit profilé, la surface d'appui étant parallèle à l'âme (1), chaque élément de soutien s'étendant dans deux plans distincts orthogonaux entre eux,
**caractérisé en ce que** à chaque coin de l'âme (1) est prévue une découpe carrée (26, 27, 28, 29), dite découpe de coin, et **en ce que** des couples d'entailles en forme de V (35, 36 ; 37, 38) sont présents à chaque coin desdites découpes de coin.

2. Dispositif selon la revendication 1, **caractérisé en ce que** les éléments de soutien sont agencés dans un même plan parallèle à l'âme (1) de sorte que les surfaces d'appui de toutes les découpes soient coplanaires pour accueillir les profilés dans un même plan.

3. Dispositif selon la revendication 1 ou 2, **caractérisé en ce que** chaque élément de soutien est intégré à une patte (2, 3, 4, 5) orthogonale audit plan de l'âme, s'étendant dans une même direction, d'un côté du plan de l'âme, et dans deux plans distincts orthogonaux entre eux, chaque élément de soutien étant une découpe, fente ou encoche dans une direction transversale à la direction d'extension de la patte, dont au moins un des chants forme le moyen d'accueil d'un profilé, par engagement du profilé, et la surface d'appui et de maintien dudit profilé, la surface d'appui étant parallèle à l'âme.

4. Dispositif selon la revendication 3, **caractérisé en ce que** les pattes (2, 3, 4, 5) sont en saillie de l'âme (1) selon une même direction, et sont destinées à s'engager pour chacune dans l'intérieur d'un profilé, tandis que chaque élément de soutien coopère avec le bord d'un profilé pour soutenir ce dernier.

5. Dispositif selon l'une des revendications 3 ou 4, **caractérisé en ce qu'**il comporte quatre pattes (2, 3, 4, 5) parallèles deux à deux.

6. Dispositif selon l'une quelconque des revendications 3 à 5, **caractérisé en ce que** chaque patte comporte deux éléments de soutien alignés et de part et d'autre du plan de l'âme.

7. Dispositif selon l'une quelconque des revendications précédentes, **caractérisé en ce que** chaque élément de soutien présente la forme d'un doigt ou crochet en forme de L, dont la concavité est tournée d'une part vers l'âme (1) et d'autre part vers l'extrémité du côté correspondant de l'âme (1).

8. Dispositif selon l'une quelconque des revendications précédentes, **caractérisé en ce que** chaque élément de soutien est apte à porter par-dessous, sur une surface correspondante du profilé, tournée vers l'âme (1), le profilé portant par gravité sur cet élément de soutien.

9. Dispositif selon l'une quelconque des revendications précédentes, **caractérisé en ce que** :
- chaque entaille en forme de V (35, 36, 37, 38) est d'axe médian orienté sensiblement selon l'un des deux bords respectifs à angle droit de la découpe de coin (26, 27, 28, 29) correspondante.

10. Ensemble incluant :
- Au moins deux profilés (P4, P6) comprenant chacun une semelle (15), deux flancs latéraux (14, 16) transversaux à l'âme, un retour (18, 19) étant prévu sur le bord distal d'au moins un des flancs ;
- un dispositif (C) de liaison amovible des deux profilés, selon l'une quelconque des revendications précédentes, destiné à assurer la liaison amovible d'au moins un premier profilé (P4) disposé dans un premier plan et d'au moins un second profilé (P6) destiné à être disposé dans un plan sensiblement perpendiculaire audit plan du premier profilé.

## Patentansprüche

1. Vorrichtung (C), die dazu bestimmt ist, für eine entfernbare Verbindung zu sorgen, mit mindestens zwei Profilen (P4, P5, P6), die dazu bestimmt sind, gekreuzt und vor allem im rechten Winkel angeordnet zu werden, und/ oder dazu bestimmt sind, in zwei im Allgemeinen senkrechten Ebenen angeordnet zu werden, umfassend:
- ein Stegblech (1), das eine Ebene definiert und vier Ecken oder Winkel aufweist;
- mindestens zwei Stützelemente, die imstande sind, jeweils ein Aufnahmemittel für ein Profil, durch Einführen des Profils, und eine Fläche zum Abstützen und Festhalten des Profils zu bilden, wobei die Fläche zum Abstützen parallel zum Stegblech (1) liegt, wobei sich jedes Stützelement über zwei unterschiedliche Ebenen erstreckt, die zueinander orthogonal sind, **dadurch gekennzeichnet, dass** in jeder Ecke des Stegblechs (1) ein quadratischer Ausschnitt (26, 27, 28, 29), der Eckausschnitt genannt wird, vorgesehen ist, und dadurch, dass Einkerbungspaare in Form eines V (35, 36; 37, 38) in jeder Ecke der Eckausschnitte vorhanden sind.

2. Vorrichtung nach Anspruch 1, **dadurch gekennzeichnet, dass** die Stützelemente auf einer selben Ebene parallel zum Stegblech (1) angeordnet sind, sodass die Flächen zum Abstützen aller Ausschnitte komplanar sind, um die Profile auf einer selben Ebene aufzunehmen.

3. Vorrichtung nach Anspruch 1 oder 2, **dadurch gekennzeichnet, dass** jedes Stützelement in eine zur Ebene des Stegblechs orthogonale Lasche (2, 3, 4, 5) integriert ist, die sich auf einer Seite der Ebene des Stegblechs in eine selbe Richtung erstreckt, und in zwei unterschiedliche Ebenen orthogonal zueinander, wobei jedes Stützelement ein Ausschnitt, Spalt oder Schlitz in einer zur Ausdehnungsrichtung der Lasche querlaufenden Richtung ist, von dem mindestens eine der Kanten ein Mittel zur Aufnahme eines Profils durch Einführen des Profils und die Fläche zum Abstützen und Festhalten des Profils bildet, wobei die Fläche zum Abstützen parallel zum Stegblech ist.

4. Vorrichtung nach Anspruch 3, **dadurch gekennzeichnet, dass** die Laschen (2, 3, 4, 5) über das Stegblech (1) in eine selbe Richtung überstehen und dazu bestimmt sind, jeweils in das Innere eines Profils eingeführt zu werden, während jedes Stützelement mit dem Rand eines Profils zusammenwirkt, um letzteres zu stützen.

5. Vorrichtung nach einem der Ansprüche 3 oder 4, **dadurch gekennzeichnet, dass** es vier Laschen (2, 3, 4, 5), die paarweise parallel sind, umfasst;

6. Vorrichtung nach einem der Ansprüche 3 bis 5, **dadurch gekennzeichnet, dass** jede Lasche zwei Stützelemente umfasst, die beiderseits der Ebene des Stegblechs ausgerichtet sind.

7. Vorrichtung nach einem der vorstehenden Ansprüche, **dadurch gekennzeichnet, dass** jedes Stützelement die Form eines Fingers oder Hakens in Form eines L aufweist, dessen Konkavität einerseits zum Stegblech (1) und andererseits zu dem Ende der entsprechenden Seite des Stegblechs (1) gedreht ist.

8. Vorrichtung nach einem der vorstehenden Ansprüche, **dadurch gekennzeichnet, dass** jedes Stützelement imstande ist, darüber hinweg auf einer entsprechenden Fläche des Profils, die zum Stegblech (1) gedreht ist, das Profil zu tragen, das durch Schwerkraft auf diesem Stützelement aufliegt.

9. Vorrichtung nach einem der vorstehenden Ansprüche, **dadurch gekennzeichnet, dass**:
- jede Einkerbung in Form eines V (35, 36, 37, 38) auf einer Mittelachse liegt, die im Allgemeinen entsprechend dem einen der beiden jeweiligen Ränder im rechten Winkel zum entsprechenden Eckausschnitt (26, 27, 28, 29) orientiert ist.

10. Einheit, Folgendes beinhaltend:
- mindestens zwei Profile (P4, P6), jeweils eine Sohle (15), zwei seitliche Flanken (14, 16) querlaufend zum Stegblech, umfassend, wobei am distalen Rand mindestens einer der Flanken eine Rückführung (18, 19) vorgesehen ist;
- eine Vorrichtung (C) für eine entfernbare Verbindung der beiden Profile nach einem der vorstehenden Ansprüche, die dazu bestimmt ist, für die entfernbare Verbindung mindestens eines ersten Profils (P4), das auf einer ersten Ebene angeordnet ist, und mindestens eines zweiten Profils (P6) zu sorgen, das dazu bestimmt ist, auf einer im Allgemeinen senkrechten Ebene zur Ebene des ersten Profils angeordnet zu werden.

## Claims

1. Device (C) intended to provide the detachable connection of at least two profiles (P4, P5, P6), intended to be arranged in a crossed manner and in particular at right angles, and/or intended to be arranged in two substantially perpendicular planes comprising:
- a web (1) defining a plane and having four corners or angles;
- at least two support elements, each capable of forming a means for receiving a profile, by engagement of the profile, and a surface for bearing and supporting said profile, the bearing surface being parallel to the web (1), each support element extending in two separate planes that are orthogonal to one another,
**characterised in that** a square cut (26, 27, 28, 29), called a corner cut, is provided at each corner of the web (1), and **in that** pairs of V-shaped notches (35, 36; 37, 38) are present at each corner of said corner cuts.

2. Device according to claim 1, **characterised in that** the support elements are arranged in the same plane parallel to the web (1) such that the bearing surfaces of all of the cuts are coplanar in order to receive the profiles in the same plane.

3. Device according to either claim 1 or claim 2, **characterised in that** each support element is incorporated into a lug (2, 3, 4, 5) orthogonal to said plane of the web, extending in the same direction, on one side of the plane of the web, and in two separate planes orthogonal to one another, each support element being a cut, slot or notch in a direction transverse to the direction of extension of the lug, at least one of the edges whereof forms the means for receiving a profile, by engagement of the profile, and the surface for bearing and supporting said profile, the bearing surface being parallel to the web.

4. Device according to claim 3, **characterised in that** the lugs (2, 3, 4, 5) project from the web (1) in the same direction, and are each intended to be engaged inside a profile, whereas each support element cooperates with the edge of a profile to support said profile.

5. Device according to either claim 3 or claim 4, **characterised in that** it comprises four lugs (2, 3, 4, 5) parallel in a two-by-two formation.

6. Device according to any of claims 3 to 5, **characterised in that** each lug comprises two aligned support elements on either side of the plane of the web.

7. Device according to any of the previous claims, **characterised in that** each support element has the shape of an L-shaped hook or finger, the concavity whereof is turned on the one hand towards the web (1) and on the other hand towards the end of the corresponding side of the web (1).

8. Device according to any of the previous claims, **characterised in that** each support element is capable of bearing thereunder, on a corresponding surface of the profile, turned towards the web (1), the profile bearing, under gravity, on said support element.

9. Device according to any of the previous claims, **characterised in that**:
- each V-shaped notch (35, 36, 37, 38) has a median line substantially oriented along one of the two respective right-angled edges of the corresponding corner cut (26, 27, 28, 29).

10. Assembly including:
- at least two profiles (P4, P6), each comprising a base plate (15) and two side walls (14, 16) transverse to the web, whereby a return (18, 19) is provided for on the distal edge of at least one of the walls;
- a device (C) for the detachable connection of the two profiles, according to any of the previous claims, intended to produce the detachable connection of at least one first profile (P4) arranged in a first plane and at least one second profile (P6) intended to be arranged in a plane substantially perpendicular to said plane of the first profile.
